(19) **Europäisches Patentamt / European Patent Office / Office européen des brevets**

(11) **EP 2 769 174 B1**

(12) **FASCICULE DE BREVET EUROPEEN**

(45) Date de publication et mention de la délivrance du brevet:
**05.09.2018 Bulletin 2018/36**

(21) Numéro de dépôt: **12773329.3**

(22) Date de dépôt: **17.10.2012**

(51) Int Cl.:
***G01B 7/06*** (2006.01)

(86) Numéro de dépôt international:
**PCT/EP2012/070599**

(87) Numéro de publication internationale:
**WO 2013/057157 (25.04.2013 Gazette 2013/17)**

(54) **PROCEDE DE MESURE D'EPAISSEUR D'UNE COUCHE DE REVETEMENT PAR INDUCTION DE CHAMPS MAGNETIQUES**

VERFAHREN ZUR MESSUNG DER DICKE EINER BESCHICHTUNG DURCH INDUKTION VON MAGNETFELDERN

METHOD FOR MEASURING THE THICKNESS OF A COATING LAYER BY INDUCING MAGNETIC FIELDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2011 FR 1159513**

(43) Date de publication de la demande:
**27.08.2014 Bulletin 2014/35**

(73) Titulaires:
• **Safran Landing Systems**
  **78140 Vélizy-Villacoublay (FR)**
• **Aircelle**
  **76700 Gonfreville-l'Orcher (FR)**

(72) Inventeurs:
• **GAY, Lionel**
  **F-91330 YERRES (FR)**
• **GARRIGOU, Nicolas**
  **F-78140 Velizy Villacoublay (FR)**
• **MONERIE-MOULIN, Francis**
  **F-78140 Velizy Villacoublay (FR)**

(74) Mandataire: **Parzy, Benjamin Alain et al**
  **Cabinet Boettcher**
  **16, rue Médéric**
  **75017 Paris (FR)**

(56) Documents cités:
**US-A- 5 889 401    US-B1- 6 366 083**
**US-B1- 6 377 039**

• **MOULDER J C ET AL: "THICKNESS AND CONDUCTIVITY OF METALLIC LAYERS FROM EDDY CURRENT MEASUREMENTS", REVIEW OF SCIENTIFIC INSTRUMENTS, AIP, MELVILLE, NY, US, vol. 63, no. 6, 1 juin 1992 (1992-06-01), pages 3455-3465, XP000301850, ISSN: 0034-6748, DOI: 10.1063/1.1143749**

**Description**

ARRIERE PLAN DE L'INVENTION

Plusieurs méthodes de mesure d'épaisseurs de revêtements supportés par des substrats sont connues. Certaines de ces méthodes font appel :

- à des mesures de géométrie des pièces, avant et après fixation du revêtement sur le substrat ; ou
- à la mesure de la perméabilité magnétique du substrat par une sonde placée sur le revêtement et par conséquent éloignée du substrat d'une distance « d'entrefer » (aussi connu dans le domaine sous le terme de « lift-off ») correspondant à l'épaisseur du revêtement ; ou
- à la mesure à l'aide de Courants de Foucault générés dans le substrat lorsque les revêtements sont non conducteurs et que le substrat est lui-même conducteur.

Toutefois, ces méthodes ont des inconvénients. La première méthode citée ne permet pas de mesurer précisément l'épaisseur du revêtement porté sur une surface cylindrique, par exemple lorsque le substrat à la forme d'une pièce de révolution telle qu'une tube d'atterrisseur d'avion. En effet, la mesure du diamètre du cylindre revêtu permet d'avoir une idée de la somme des épaisseurs de revêtement de part et d'autre du cylindre mais ne permet pas de connaître les valeurs individuelles de chacune de ces épaisseurs. Avec une telle mesure, on ne peut pas garantir que le revêtement formé sur le substrat cylindrique a bien au moins une épaisseur minimale exigée par les normes.

Dans le cas d'un revêtement en matériau électriquement conducteur, tel que du carbure de tungstène (WC-Co-Cr), placé sur un substrat conducteur et amagnétique tel que du titane, aucune des deux dernières méthodes ne donne satisfaction.

En effet, la seconde méthode ne peut être utilisée lorsque le substrat est amagnétique car le champ magnétique utilisé dans la mesure de perméabilité magnétique n'est pas perturbé par le titane. On ne peut donc pas détecter de variation de champ magnétique en fonction de l'éloignement de la sonde vis-à-vis du substrat et on ne peut donc pas en déduire l'épaisseur de la couche de revêtement.

L'usage de courants de Foucault pour détecter l'épaisseur du revêtement électriquement conducteur porté sur un substrat également conducteur manque de précision et il serait souhaitable d'améliorer cette précision.

Les documents US 5 889 401 A et US 6 366 083 B1 décrivent la mesure d'épaisseur d'une couche de revêtement d'une pièce formée sur un substrat, le revêtement et le substrat étant électriquement conducteurs. L'épaisseur de la couche est mesurée en exploitant deux signaux d'induction induites par des moyens d'induction à deux fréquences différentes.

OBJET DE L'INVENTION

Un objet de l'invention est de fournir un procédé et/ou un dispositif permettant d'estimer, par mesure et de manière non destructive, l'épaisseur d'un revêtement supporté par un substrat, sachant que le revêtement et le substrat sont conducteurs de l'électricité et que préférentiellement le substrat est amagnétique.

Le matériau amagnétique formant le substrat est typiquement un alliage de titane tel :

- qu'un alliage connu sous le nom commercial Ti5553 qui contient du Ti, moins de 5% d'Al, 5% Mo, 5% V, 3% Cr et 0.5% Fe ; ou
- qu'un alliage connu sous le nom commercial Ti10-2-3 contenant du Ti entre 82.855 et 86.8%, V entre 9.00% et 11.0%, préférentiellement 10%, Fe entre 1.60 et 2.20 %, préférentiellement 2%, Al entre 2.60 et 3.40 %, préférentiellement 3%), C inférieur ou égal à 0.0500 %, H inférieur ou égal à 0.0150%, N inférieur ou égal à 0.0500%, autres éléments : inférieur ou égal à 0.300 %, O inférieur ou égal à 0.130 % (ces pourcentages sont des pourcentages massiques d'éléments chimiques dans l'alliage).

Le matériau formant le revêtement dont on veut mesurer l'épaisseur est un alliage électriquement conducteur, typiquement un carbure tel qu'un carbure de tungstène WC, de cobalt et de chrome.

RESUME DE L'INVENTION

L'invention concerne essentiellement un procédé de mesure d'épaisseur d'une couche de revêtement d'une pièce formée sur un substrat de cette pièce. Le revêtement et le substrat sont respectivement composés de premier et second matériaux électriquement conducteurs distincts l'un de l'autre. Le procédé comportant en outre

- le positionnement de moyens d'induction par rapport à la couche de revêtement et l'alimentation de ces moyens d'induction à l'aide d'au moins un signal électrique alternatif afin d'induire dans la pièce un champ magnétique dépendant du signal électrique d'alimentation;
- la mesure d'au moins une caractéristique physique variant en fonction du champ magnétique induit dans la pièce ;
- la détermination de première et seconde valeurs d'un indicateur, cet indicateur dépendant au moins de la conductivité électrique du premier matériau et de fréquences prises par le signal électrique d'alimentation. Cet indicateur est par exemple une conductivité d'une partie de la pièce traversée par le champ magnétique induit.

La première valeur d'indicateur est déterminée à partir d'une mesure de ladite au moins une caractéristique physique réalisée lorsque le signal électrique a une première fréquence donnée et la seconde valeur d'indicateur est déterminée à partir d'une mesure de ladite au moins une caractéristique physique réalisée lorsque le signal électrique a une seconde fréquence donnée distincte de la première fréquence.

Puis, selon le procédé de l'invention :

- on calcule l'écart entre les première et seconde valeurs de l'indicateur et on détermine l'épaisseur de la couche de revêtement $e_r$ en fonction de cet écart et de données prédéterminées corrélant :
- l'écart entre des valeurs de l'indicateur ; avec
- des valeurs d'épaisseurs de couche de revêtement correspondantes.

En réalisant plusieurs mesures sur différentes pièces ayant exactement le même couple de premier et second matériaux mais ayant des épaisseurs de couches différentes les unes des autres, et en utilisant les mêmes moyens d'induction et le même signal électrique d'alimentation, on constate que la variation d'épaisseur de la couche de revêtement est un paramètre influant de la caractéristique physique mesurée qui est en l'occurrence une impédance Z variant en fonction du champ magnétique induit dans la pièce. Ainsi, il y a bien un lien entre l'épaisseur de couche et la caractéristique du champ magnétique traversant cette couche. Toutefois, en réalisant de nombreux essais on s'aperçoit que la corrélation entre la variation d'épaisseur de couche de revêtement et la variation de la caractéristique physique du champ magnétique mesurée n'est pas évidente à définir.

En résumé, selon le procédé de l'invention, on réalise des première et seconde mesures de la caractéristique physique variant en fonction du champ magnétique induit dans la pièce. La première mesure de la caractéristique physique étant réalisée alors que les moyens d'induction sont alimentés avec un signal d'alimentation ayant une première fréquence et la seconde mesure de la caractéristique physique est réalisée alors que les moyens d'induction sont alimentés avec un signal d'alimentation ayant une seconde fréquence différente de la première fréquence.

A l'aide du résultat de la première mesure, on détermine la première valeur prise par un indicateur.

A l'aide du résultat de la seconde mesure, on détermine la seconde valeur prise par l'indicateur.

En l'occurrence, l'indicateur évalué à partir de la caractéristique physique mesurée est préférentiellement une conductivité électrique de la partie de pièce traversée par le champ magnétique. Ainsi, dans les exemples ci-après, la première valeur de l'indicateur est la conductivité de la partie de pièce traversée par le champ magnétique généré lorsque le signal d'alimentation à une première fréquence F1 et la seconde valeur de l'indicateur est la conductivité de la partie de pièce traversée par le champ magnétique généré lorsque le signal d'alimentation à une seconde fréquence F2.

Un aspect essentiel de l'invention consiste à utiliser la différence / l'écart entre ces première et seconde valeurs de l'indicateur pour déterminer l'épaisseur de la couche de revêtement. On constate que l'épaisseur de la couche est déterminée plus précisément en utilisant la différence entre les première et seconde valeurs de l'indicateur mesurées avec des fréquences d'alimentations distinctes que si l'on utilisait des valeurs obtenues à partir de deux mesures de la caractéristique du champ magnétique effectuées avec des signaux d'alimentation ayant une seule fréquence.

Par ailleurs, l'usage de cet écart permet une évaluation relativement précise de l'épaisseur de couche de revêtement tout en simplifiant grandement les calculs, comme cela sera expliqué par la suite.

Un avantage de ce procédé d'évaluation d'épaisseur de couche de revêtement est qu'il nécessite peu de calculs, en l'occurrence au moins une simple soustraction. Ainsi le dispositif d'évaluation d'épaisseur adapté à la mise en oeuvre du procédé de l'invention peut comporter des moyens de calculs simples et peu coûteux.

BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

- la figure 1 présente un dispositif permettant de mettre en oeuvre le procédé selon l'invention;
- la figure 2 présente un graphique montrant l'évolution de la profondeur de pénétration de champ magnétique dans une pièce formée d'un substrat conducteur et d'une couche de revêtement conductrice en fonction de la fréquence Fn du signal d'induction du champ ;

- la figure 3 présente une vue schématique d'un dispositif selon l'invention permettant de mettre en oeuvre le procédé de mesure selon l'invention pour réaliser une cartographie d'une pièce indiquant l'épaisseur de la couche à différents endroits de la pièce ;
- la figure 4 présente une vue schématique d'un autre dispositif selon l'invention permettant aussi de mettre en oeuvre le procédé de mesure selon l'invention pour mesurer l'épaisseur de couche lors de sa fabrication et permettant ainsi de réguler les moyens d'application du matériau de couche ;
- la figure 5 est un graphique présentant des mesures d'écarts de conductivités réalisées à des fréquences F1 et F2 sur une série d'éprouvettes d'étalonnage dont les épaisseurs respectives sont indiquées en abscisse et une courbe bijective de régression polynomiale réalisée à l'aide de ces mesures et corrélant les valeurs d'écarts de conductivité aux épaisseurs de revêtement.

## DESCRIPTION DETAILLEE DE L'INVENTION

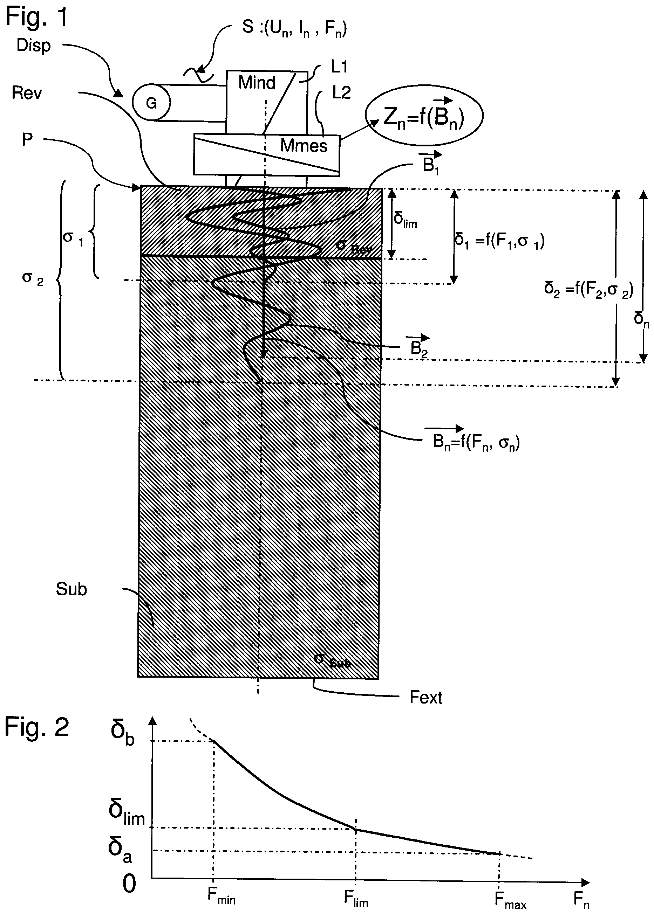

Les figures 1, 3 et 4 présentent chacune une vue en coupe d'une pièce P comportant une couche de revêtement Rev en un premier matériau portée sur un substrat Sub en un second matériau. Ces premier et second matériaux sont électriquement conducteurs, et au moins le matériau de substrat est amagnétique. En l'occurrence le substrat est en titane et le matériau de revêtement est un carbure WC.

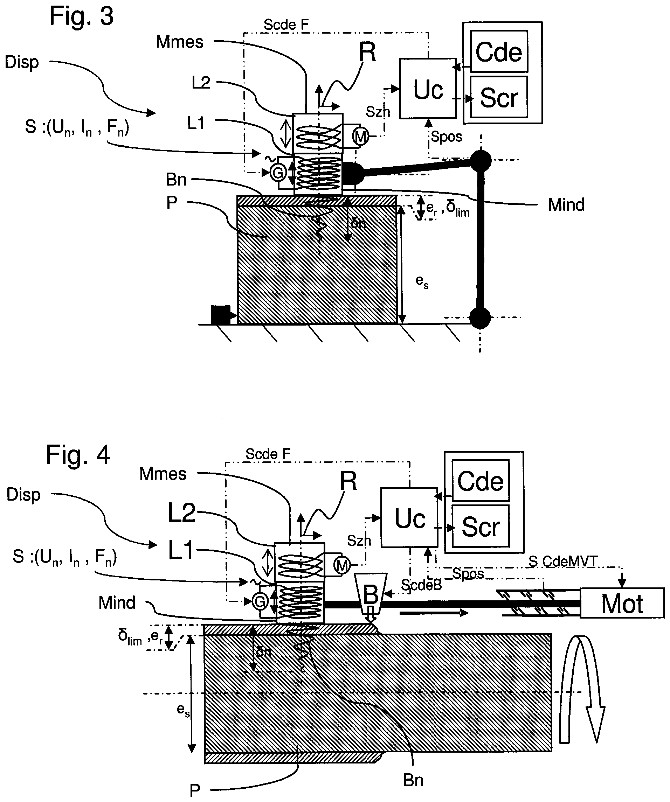

Sur les figures 1 et 2 la couche Rev est réalisée uniquement sur une face du substrat Sub, alors que sur la figure 4 le substrat est un élément cylindrique et la couche est annulaire et réalisée tout autour du substrat Sub.

Pour mettre en oeuvre le procédé de mesure d'épaisseur $\delta$lim ou $e_r$ de la couche de revêtement Rev, on utilise des moyens d'induction Mind qui sont en l'occurrence reliés à un générateur G de signal électrique alternatif S. A chaque instant n, ce signal S a une tension Un, une intensité In et une fréquence Fn données. Les moyens d'induction Mind sont, dans chacune des figures 1, 3, 4, réalisés à l'aide d'une bobine L1. On utilise également des moyens de mesure du paramètre physique variant en fonction du champ B induit par les moyens d'induction Mind dans la pièce P. Ces moyens de mesure Mmes comportent une électronique de mesure M et dans le cas des figures 1, 3 et 4 une bobine L2 ayant une inductance Zn variant en fonction du champ magnétique Bn induit dans la pièce P à chaque instant n.

On note que ces moyens de mesure Mmes peuvent aussi être réalisés à l'aide d'une électronique de mesure M directement reliée à la bobine L1 pour mesurer la variation d'impédance de cette bobine L1 en fonction du signal S délivré par le générateur G et du champ magnétique Bn induit dans la pièce P. Dans ce cas il n'y aurait pas besoin de la bobine L2 mais uniquement de la bobine L1.

Les moyens de mesure Mmes délivrent à une unité de calcul Uc un signal Szn représentatif de la caractéristique physique mesurée par ces moyens de mesure Mmes qui est ici une impédance Zn de la bobine L2. Comme on le voit sur les figures 3 et 4, l'unité de calcul Uc est reliée à une interface homme machine comportant :

- des moyens de commande Cde permettant par exemple à l'utilisateur de programmer / paramétrer le dispositif de mesure Disp, par exemple pour réaliser les opérations nécessaires à la détermination des fréquences F1 et F2 ; et
- des moyens d'affichage d'information tels qu'un écran Scr permettant par exemple d'afficher le résultat de la mesure d'épaisseur er aussi notée $\delta$lim.

Les dispositifs Disp des figures 3 et 4 sont aussi dotés de moyens de détection de la position R des moyens d'induction Mind par rapport à la pièce P qui délivrent à l'unité de calcul Uc un signal Spos représentatif de cette position R.

L'unité de calcul Uc enregistre la position R des moyens d'induction Mind par rapport à la pièce P et associe à certaines au moins des positions R enregistrées des valeurs mesurées d'épaisseurs $e_r$, $\delta$lim correspondantes. On peut ainsi grâce au dispositif de l'invention Disp générer des fichiers illustrant les variations d'épaisseur $e_r$ de la couche Rev, et indiquant pour une série de positions R, les épaisseurs mesurées de couche correspondantes.

L'unité de calcul Uc est par ailleurs reliée aux moyens d'induction, en particulier au générateur G du signal S afin de transmettre un signal de commande ScdeF qui permet de réguler le signal en fixant par exemple la fréquence Fn du signal S que le générateur doit délivrer à la bobine L1.

Le dispositif Disp peut également comporter une buse de projection du revêtement Rev sur le substrat Sub de revêtement, cette buse B étant relié à des moyens Mot de commande du déplacement de la buse B par rapport à la pièce P. Dans le mode de la figure 4, la pièce P est montée à rotation sur un tour portant la buse B et commandant son déplacement par rapport à la pièce P via un moteur Mot commandé par l'unité de calcul Uc via un signal de commande de mouvement ScdeMVT. L'unité de calcul est également reliée aux moyens de projection alimentant la buse B pour en commander les conditions de projection de matière via la buse B. Cette liaison permet à l'unité Uc de transmettre un signal de commande des conditions de projection ScdeB.

Les moyens de commande de déplacement Mot peuvent aussi comporter des moyens de mesure de la position de la buse par rapport à la pièce.

Dans le mode de la figure 4 les moyens d'induction Mind sont attachés à la buse B pour la suivre lors de ses déplacements et ainsi mesurer l'épaisseur $e_r$ du revêtement peu après qui ait été déposé.

Idéalement, on fait en sorte que pendant la mesure d'épaisseur selon le procédé de l'invention, on limite le mouvement relatif de la pièce P par rapport aux moyens d'induction Mind pour avoir une indication précise de l'épaisseur et de la position R de la mesure.

Ainsi, selon un mode de mise en oeuvre du procédé de l'invention, les moyens de positionnement Mot immobilisent les moyens d'induction Mind par rapport à la pièce P au moins le temps des mesures de conductivités. Selon ce mode, si on veut réaliser la mesure de l'épaisseur pendant l'usinage, on peut faire en sorte de déplacer l'outil B indépendamment des moyens d'induction et d'immobiliser les moyens d'induction Mind par rapport à la pièce, au moins le temps de la mesure, sans pour autant stopper le déplacement de l'outil par rapport à la pièce. En l'occurrence, si l'outil est une buse de projection B, on réalise une projection en continu et par instant, lors des mesures, on immobilise les moyens d'induction par rapport à la pièce.

Alternativement, on peut accepter que la mesure soit réalisée alors que les moyens d'induction Mind se déplacent par rapport à la pièce P, ce qui est permis par le procédé selon l'invention qui nécessite des calculs simples et relativement peu nombreux, diminuant ainsi la durée des mesures d'épaisseur. Ce mode est utilisé par exemple lorsque l'on souhaite réaliser la mesure pendant l'usinage alors que la pièce P se déplace par rapport aux moyens d'induction Mind.

Dans le mode réalisation de la figure 4, l'unité de calcul Uc peut réaliser une boucle de rétroaction consistant à réguler via le signal ScdeB les conditions de projection du revêtement en fonction :

- de l'épaisseur mesurée selon le procédé de l'invention ; et
- de consignes prédéterminées d'épaisseurs de la couche de revêtement, chacune de ces consignes peut être variable selon l'endroit concerné sur la pièce P.

Le dispositif de l'invention permet de s'assurer durant la réalisation de la couche que cette dernière est conforme à la consigne.

Il va maintenant être exposé comment est mis en oeuvre le procédé de mesure d'épaisseur selon l'invention.

**MISE EN OEUVRE DU PROCEDE SELON L'INVENTION** :

Comme on le voit sur la figure 2, qui représente l'évolution de la profondeur de pénétration du champ magnétique B dans la pièce en fonction de la fréquence Fn du signal S d'alimentation des moyens d'induction Mind, on constate que pour une plage de fréquences donnée du signal d'alimentation S s'étendant entre une fréquence minimale Fmin (par exemple 10kHz) et une fréquence maximale Fmax (par exemple 960 kHz), plus la fréquence Fn augmente et plus la profondeur de pénétration du champ B dans la pièce P diminue et vis versas. Ce phénomène est lié à un effet de peau de la pièce P. Ainsi, dans cette même plage de fréquence donnée Fmin-Fmax, où Fmin est inférieure à Fmax, plus la fréquence Fn est importante et plus la conductivité $\sigma$Rev du matériau formant la couche Rev influencera la caractéristique mesurée Zn du champ magnétique B, et moins la conductivité $\sigma$Sub du matériau formant le substrat Sub influencera la caractéristique mesurée du champ B.

Dans cette plage de fréquences donnée, on a une fréquence Flim qui est la fréquence théorique à partir de laquelle le champ B traverse toute l'épaisseur de la couche Rev et s'arrête à l'interface entre la couche Rev et le substrat Sub. Sur une première plage de fréquence Flim-Fmax la profondeur de pénétration du champ magnétique dans la pièce est telle que le champ magnétique B passe dans le premier matériau de la couche de revêtement Rev mais ne pénètre pas dans le second matériau du substrat Sub. Ainsi sur cette première plage Flim-Fmax, la caractéristique physique mesurée qui varie en fonction du champ magnétique B ne dépend pas de la conductivité $\sigma$ Sub du matériau du substrat, mais dépend uniquement de la conductivité $\sigma$ Rev du matériau de couche. A contrario, sur une seconde plage de fréquence Fmin-Flim la profondeur de pénétration $\delta$n du champ magnétique Bn dans la pièce P est telle que le champ magnétique traverse le premier matériau de la couche Rev et pénètre dans le second matériau du substrat Sub. Ainsi, sur cette plage Fmin-Flim, la caractéristique physique Zn mesurée qui varie en fonction du champ magnétique dépend de la conductivité du matériau de revêtement $\sigma$Rev, mais dépend aussi de la conductivité $\sigma$Sub du matériau de substrat.

En d'autres termes, dans la plage Fmin-Flim, plus la fréquence du signal S d'alimentation est faible et plus la conductivité $\sigma$Sub influence la caractéristique mesurée Zn, et moins la conductivité $\sigma$Rev influence la caractéristique mesurée Zn. Pour mesurer l'épaisseur du revêtement $\delta$lim selon le procédé de l'invention on cherche à caractériser la pénétration du champ magnétique B dans la pièce P et pour cela on mesure une caractéristique physique variant en fonction du champ magnétique.

Cette caractéristique physique mesurée variant en fonction du champ magnétique peut être par exemple :

- une impédance Zn des moyens d'induction Mind; et/ou

- une impédance Zn d'un circuit de mesure Mmes variant en fonction du champ magnétique Bn induit dans la pièce P ; et/ou
- l'intensité du champ Bn et/ou
- la profondeur $\delta$n de pénétration du champ Bn dans la pièce et/ou
- la conductivité $\sigma$n d'une partie de la pièce P traversée par le champ magnétique B et/ou
- la résistivité d'une partie de la pièce traversée par le champ magnétique Bn.

On note que la conductivité $\sigma$n ou la résistivité de la partie de la pièce traversée par le champ magnétique dépend de la profondeur de pénétration du champ dans la pièce qui dépend elle-même de la fréquence Fn du signal d'alimentation S. La mesure de conductivité $\sigma$n ou de résistivité est généralement réalisée par la mesure d'impédance Zn.

Après avoir mesuré la caractéristique physique Zn, on déduit la valeur d'un indicateur dépendant au moins de la conductivité électrique $\sigma$Rev du premier matériau, cet indicateur est par exemple la conductivité $\sigma$n de la partie de la pièce traversée par le champ magnétique sachant que cette conductivité varie :

- d'une part en fonction de la conductivité $\sigma$Rev du premier matériau constituant la couche et de la conductivité $\sigma$Sub du second matériau constituant le substrat ; et
- d'autre part en fonction du rapport entre l'épaisseur de couche Rev et la profondeur de pénétration du champ magnétique dans le substrat Sub.

En résumé, selon ce mode particulier de réalisation de l'invention, pour une fréquence d'alimentation Fn donnée on mesure une valeur de caractéristique physique qui est une impédance Zn et on en déduit une valeur d'un indicateur, en l'occurrence une conductivité $\sigma$n et/ou une résistivité d'une partie de pièce P traversée par le champ magnétique Bn.

Selon le procédé de l'invention le signal électrique alternatif S alimentant les moyens d'induction Mind est choisi pour adopter successivement dans le temps plusieurs fréquences données prédéterminées F1 et F2. Le choix de ces fréquences F1 et F2 sera explicité ci-après au paragraphe pré étalonnage des mesures.

Lorsque le signal S est en régime constant (c'est-à-dire lorsque la fréquence du signal électrique est égale à la fréquence F1 ou F2 prédéterminée à +/-5%), on mesure la caractéristique physique qui varie en fonction de la fréquence Fn, de la conductivité du matériau de couche $\sigma$Rev et par conséquent en fonction du champ magnétique B induit dans la pièce P.

On obtient ainsi respectivement deux mesures Z1 et Z2 du paramètre physique Zn, l'une réalisée lorsque la fréquence est égale à F1 et l'autre réalisée lorsque la fréquence est égale à F2.

A partir de ces mesures d'impédance Z1 et Z2 respectives, on calcule des valeurs $\sigma$1 et $\sigma$2 prises par un indicateur $\sigma$n qui est la conductivité d'une partie de la pièce traversée par le champ magnétique Bn.

Pour cela, on utilise une formule de calcul prédéterminée de la forme générale $\sigma$n= f(Zn, Fn, In, Un) dans laquelle Zn est l'impédance mesurée qui est représentative des courants de Foucault induits dans la pièce P par les moyens d'induction Mind alimentés avec le signal S de fréquence Fn, intensité In et tension Un.

Après avoir calculé les valeurs $\sigma$1 et $\sigma$2 respectives prises par l'indicateur, on calcul l'écart entre $\sigma$1 et $\sigma$2 suivant la formule Ecart = |$\sigma$1-$\sigma$2|.

Enfin en utilisant des données prédéterminées lors d'un étalonnage (voir chapitre ci-après sur l'étalonnage) des moyens de mesure, on déduit l'épaisseur de la couche de revêtement située en vis-à-vis des moyens d'induction en fonction de l'écart mesuré entre les valeurs de l'indicateur $\sigma$n prises aux fréquences respectives F1 et F2.

Ces données prédéterminées corrèlent des écarts possibles entre des valeurs de l'indicateur $\sigma$n et des valeurs correspondantes d'épaisseur $e_r$ de couche du revêtement. Ces données peuvent être enregistrées dans une base de données reliant des valeurs d'écarts prédéterminées et des épaisseurs de couches pré déterminées. Alternativement ces données préenregistrées peuvent se présenter sous la forme d'une fonction de la forme Valeur d'épaisseur de couche = f(Ecart entre les valeurs de l'indicateur).

**ETALONNAGE : DETERMINATION DES DONNEES CORRELANT ECARTS DE VALEUR D'INDICATEUR ET VALEURS D'EPAISSEUR :**

Pour obtenir ces données prédéterminées, on utilise une série d'éprouvettes d'étalonnage A, B, C, D, E, F, G, H, I comportant chacune un substrat formé dudit second matériau et une couche formée dudit premier matériau, chacune des éprouvettes d'étalonnage ayant une épaisseur de couche de revêtement connue.

Puis, pour chaque éprouvette d'étalonnage, on réalise au moins une série de mesures consistant à positionner les moyens d'induction de champ électromagnétique, ou éventuellement d'autres moyens d'induction similaires, par rapport à la couche de l'éprouvette d'étalonnage et à évaluer des première et seconde valeurs d'étalonnage qui sont des valeurs prises par ledit indicateur $\sigma$n, en l'occurrence il s'agit de valeurs de conductivité $\sigma$n. La première valeur d'étalonnage est déterminée à partir d'au moins une mesure d'une caractéristique physique Z, qui est une impédance

$Z_{et1}$ réalisée lorsque les moyens d'induction d'étalonnage sont alimentés avec un premier signal d'étalonnage $S_{eta}$ de fréquence F1 égale à ladite première fréquence. De la même manière, la seconde valeur d'étalonnage est déterminée à partir d'au moins une mesure de la caractéristique physique, qui est une impédance $Z_{et2}$ réalisée lorsque les moyens d'induction d'étalonnage sont alimentés avec un second signal d'étalonnage $S_{eta}$ de fréquence F2 égale à ladite seconde fréquence. On fait préférentiellement en sorte d'enregistrer les caractéristiques du signal d'étalonnage de manière à ce que le signal S généré au moment de la mesure d'épaisseur de couche sur la pièce P ait les mêmes caractéristiques que le signal d'étalonnage Seta. Ainsi, pour toute pièce P formée des mêmes matériaux que l'éprouvette d'étalonnage et ayant sensiblement la même épaisseur de couche, on a :

- $S_{eta}$ à la fréquence F1 utilisé pour l'étalonnage sensiblement identique au signal S à la fréquence F1 utilisé pour la mesure sur pièce P ; et
- $S_{eta}$ à la fréquence F2 utilisé pour l'étalonnage sensiblement identique au signal S à la fréquence F2 utilisé pour la mesure sur pièce P.

Toujours pour faire en sorte que les conditions d'étalonnage soient aussi proches que possible des conditions de mesure sur la pièce P, on fait en sorte que la mesure de la caractéristique physique, c'est-à-dire l'impédance, soit réalisée lors de l'étalonnage avec les moyens de mesure Mmes utilisés lors de la mesure sur pièce P. Dans un mode dégradé, si les moyens de mesure Mmes utilisés lors de la mesure sur pièce étaient distincts des moyens de mesure utilisés lors de la mesure sur éprouvette d'étalonnage, on ferait alors en sorte qu'ils aient les mêmes caractéristiques électriques (même résistance, même inductance).

Après avoir calculé les première et seconde valeurs prises par l'indicateur $\sigma$n aux fréquences d'alimentation F1 et F2, on calcule pour chaque éprouvette l'écart entre les première et seconde valeurs qui lui sont associées.

Par exemple, les écarts des valeurs prises par l'indicateur de conductivité $\sigma$1 et $\sigma$2 sont données pour la série d'éprouvettes d'étalonnage A-I dans le tableau ci-après.

| N° Eprouvette | Epaisseur Rev. ($*10^{-5}$m) | $\sigma$1 (MS*m$^{-1}$) Pour Fn=F1 = 60KHz | $\sigma$2 (MS*m$^{-1}$) Pour Fn=F2 = 480KHz | Diff.= $\sigma$2-$\sigma$1 (MS*m$^{-1}$) Pour F1=60KHz et F2=480KHz |
|---|---|---|---|---|
| A | 0.017 | 0.6331 | 0.6332 | 0.0001 |
| B | 0.042 | 0.6330 | 0.6365 | 0.0035 |
| C | 0.047 | 0.6280 | 0.6343 | 0.0063 |
| D | 0.068 | 0.6315 | 0.6410 | 0.0095 |
| E | 0.083 | 0.6280 | 0.6427 | 0.0147 |
| F | 0.095 | 0.6340 | 0.6500 | 0.0160 |
| G | 0.112 | 0.6285 | 0.6533 | 0.0249 |
| H | 0.135 | 0.6400 | 0.6735 | 0.0335 |
| I | 0.148 | 0.6310 | 0.6676 | 0.0366 |

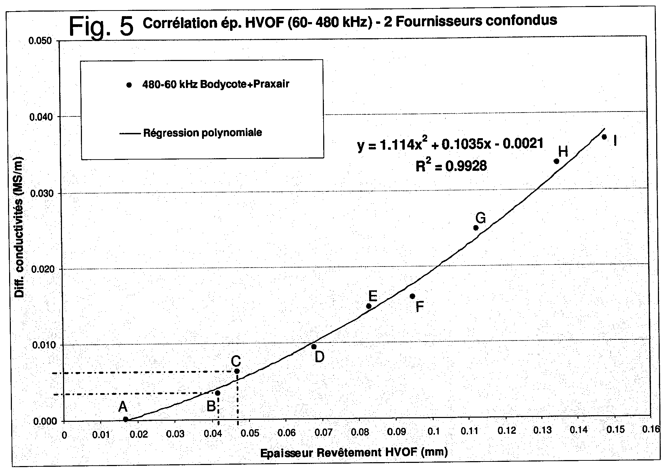

Ces données sont reproduites sur la figure 5.

Compte tenu de la croissance de la série d' épaisseurs d'éprouvettes A-I et des évolutions correspondantes de $\sigma$1 et $\sigma$2, on constate que les éprouvettes respectives C et I devraient avoir des valeurs de $\sigma$2 supérieures aux valeurs de $\sigma$2 des éprouvettes respectives B et H, mais ce n'est pas le cas car les conditions de réalisation des couches de revêtement des éprouvettes B et H.

Or de manière surprenante le fait d'utiliser l'écart entre les première et seconde valeurs $\sigma$1 et $\sigma$2 permet, comme on le constate sur la courbe de la figure 5 qui reprend les données du tableau, d'avoir une suite statistique cohérente, corrélant effectivement l'épaisseur à l'écart et cela même si les degrés de corrélations entre les séries $\sigma$1 et $\sigma$2 respectives et l'écart sont moindres.

Ainsi, le procédé de l'invention qui utilise la corrélation entre l'écart des valeurs de l'indicateur $\sigma$1 et $\sigma$2 et l'épaisseur $e_r$ permet une mesure d'épaisseur de précision améliorée. On note que dans un mode préférentiel les valeurs d'épaisseur, $\sigma$1 et $\sigma$2 de chaque éprouvette sont des moyennes obtenues à partir de plusieurs mesures successives limitant ainsi le risque d'erreur dans les données prédéterminées corrélant écarts et épaisseurs. On a constaté que le procédé de l'invention permet une tolérance de mesure d'épaisseur de couche de +/-10pm pour des couches de carbure allant de 25 à 150$\mu$m.

A partir des données d'étalonnage mesurées sur les éprouvettes A-I, on définie par régression polynomiale une courbe ou une fonction bijective reliant, dans une plage d'épaisseur donnée, chaque valeur d'épaisseur à un d'écart entre valeurs σ1 et σ2 de l'indicateur de conductivité. Cette relation de corrélation par courbe et / ou par fonction mathématique est enregistrée dans une mémoire et est par la suite utilisée pour réaliser les mesures sur pièces P.

Comme on le verra par la suite ces fréquences F1 et F2 sont choisies en fonction des premier et second matériaux des pièces dont on veut mesurer les épaisseurs de couche. Ainsi pour que les mesures de conductivité réalisées sur les éprouvettes d'étalonnage aient une corrélation avec les épaisseurs de couches qui soit sensiblement égale à la corrélation entre les mesures de conductivité réalisées sur pièces, on cherche à ce que l'épaisseur de substrat des éprouvettes soit telle que le champ pénètre moins de la moitié et préférentiellement moins d'un tiers de l'épaisseur du substrat d'éprouvette. La formule permettant de calculer la profondeur de pénétration du champ à une fréquence donnée du signal d'alimentation est donnée ci-après au chapitre PRE ETALONNAGE DES MESURES.

**PRE ETALONNAGE DES MESURES** :

Dans ce chapitre, il est expliqué comment sont choisies les première et seconde fréquences F1 et F2 utilisées pour réaliser les mesures sur pièces P et sur éprouvettes d'étalonnage conformément au procédé de l'invention.

Ce couple de fréquences F1 et F2 du signal électrique alternatif doit être approprié pour induire des champs B dans les pièces P tels qu'ils permettent d'obtenir une corrélation entre l'écart des valeurs de l'indicateur et l'épaisseur de couche de revêtement sur le substrat que l'on veut mesurer.

Pour cela on fabrique une série d'éprouvettes de pré étalonnage A-I dont les matériaux de substrat et matériaux de couches de revêtement sont respectivement identiques aux matériaux de substrat et de revêtement des pièces P dont on veut mesurer les épaisseurs de revêtement. Dans l'exemple ci-après les éprouvettes de pré étalonnage sont les mêmes que les éprouvettes d'étalonnage, mais on pourrait aussi utiliser une série d'éprouvettes de pré étalonnage distincte de la série d'éprouvettes d'étalonnage.

Après avoir fabriqué la série d'éprouvettes de pré étalonnage A-I, on mesure et enregistre leurs épaisseurs des couches respectives (ces épaisseurs sont notées dans le tableau précédent).

Les fréquences Fn du signal électrique d'alimentation S des moyens d'induction Mind sont choisies de manière que le champ magnétique Bn généré par les moyens d'induction dans la pièce ne passe pas au travers du substrat Sub. On réduit ainsi les perturbations de mesures provenant par exemple de réflexions du champ magnétique Bn contre une face externe Fext du substrat Sub.

Cette limitation de la profondeur de pénétration du champ électromagnétique Bn permet de ne pas avoir à prendre en compte l'épaisseur $e_s$ du substrat Sub pour la mesure de l'impédance. On note que l'épaisseur de substrat d'une pièce est généralement bien connue car elle est déterminée lors de la fabrication du substrat, avant application du revêtement.

La profondeur de pénétration standard δ d'un champ induit est donnée par la formule :

$$\delta \; = \; 503 \; / \; (\sqrt{\sigma} {}^*\mu r \; * \; Fn)$$

où :

- δ est la profondeur en mètre ;
- σ est conductivité électrique (S/m) du matériau Sub traversé par le champ d'induction Bn ;
- μr est la perméabilité magnétique de ce matériau (Dans le cas où ce matériau est amagnétique comme c'est le cas pour le titane, l'aluminium ou les alliages de ces métaux, μr = 1, μr étant sans dimension) ;
- Fn est la fréquence en Hertz du signal S utilisé pour générer le champ d'induction Bn dans le matériau Sub.

Pour déterminer la fréquence haute, F2 on cherche à ce que le champ magnétique B généré à fréquence F2 traverse au moins un tiers de l'épaisseur de la couche que l'on cherche à mesurer. De cette manière la caractéristique physique mesurée Z sera bien fonction de l'épaisseur de la couche.

En résumé, connaissant de façon approximative l'épaisseur es du substrat ainsi que la conductivité σn du matériau constituant ce substrat Sub, on vérifie que chacun des champs induits par les courants de fréquences sélectionnés F1 et F2 ont bien des profondeurs de pénétrations respectives δ1 et δ2 inférieures à un tiers de l'épaisseur es du substrat Sub. La fréquence la plus basse F1 est choisie pour avoir une profondeur de pénétration du champ supérieure à l'épaisseur de la couche à mesurer. La fréquence la plus élevée F2 est choisie pour que le champ pénètre au moins un tiers de l'épaisseur de couche de revêtement.

La conductivité d'un revêtement Rev est du Carbure de Tungstène WC déposé par projection haute vitesse (type de projection connu sous le terme de projection HVOF) est $\sigma$ WC $\approx$ 0.8MS/m, WC-Cr-Co = 0.8MS/m, la conductivité du Titane $\sigma$ Titane est 0.6< $\sigma$ Titane< 0.8 MS/m. La conductivité de l'alliage de titane Ti10.2.3 est $\sigma$ Ti10.2.3 $\approx$ 0.74MS/m et la conductivité de l'alliage Ti5.5.5.3 est $\sigma$ Ti5.5.5.3 =0.61MS/m.

A l'aide de la formule et des valeurs de conductivités précitées on détermine, en fonction de la fréquence Fn, les profondeurs $\delta$n de pénétration de champ Bn dans les matériaux.

Ainsi on obtient :

- avec un signal d'induction de fréquence Fn = 10 kHz :$\delta$n$\approx$ 1690 $\mu$m pour le substrat de titane et $\delta$n$\approx$ 110 $\mu$m pour le revêtement de carbure de tungstène;
- avec un signal d'induction de fréquence Fn = 60 kHz :$\delta$n$\approx$ 690 $\mu$m pour le substrat de titane et $\delta$n$\approx$ 46 $\mu$m pour le revêtement de carbure de tungstène;
- avec un signal d'induction de fréquence Fn = 120 kHz :$\delta$n$\approx$ 480 $\mu$m pour le substrat de titane et $\delta$n$\approx$ 30 $\mu$m pour le revêtement de carbure de tungstène;
- avec un signal d'induction de fréquence Fn = 240 kHz :$\delta$n$\approx$ 344 $\mu$m pour le substrat de titane et $\delta$n$\approx$ 23 $\mu$m pour le revêtement de carbure de tungstène;
- avec un signal d'induction de fréquence Fn = 480 kHz :$\delta$n$\approx$ 240 $\mu$m pour le substrat de titane et $\delta$n$\approx$ 16 $\mu$m pour le revêtement de carbure de tungstène;
- avec un signal d'induction de fréquence Fn = 960 kHz :$\delta$n$\approx$ 170 $\mu$m pour le substrat de titane et $\delta$n$\approx$ 11 $\mu$m pour le revêtement de carbure de tungstène.

Ainsi, la fréquence basse Fn =10KHz, ne pourra être utilisée que si l'épaisseur du substrat titane Sub est supérieure à 3*$\delta\eta$ = 5070 $\mu$m.

La fréquence basse Fn =60KHz, ne pourra être utilisée pour réaliser les mesures que si l'épaisseur du substrat titane Sub est supérieure à 3*$\delta\eta$ = 2070 $\mu$m.

La fréquence basse Fn =120KHz, ne pourra être utilisée pour réaliser les mesures que si l'épaisseur du substrat titane Sub est supérieure à 3*$\delta$n = 1400 $\mu$m.

Pour déterminer les valeurs des première et seconde fréquences F1, F2, on réalise sur chaque éprouvette de pré étalonnage dont on connaît les épaisseurs de couches de revêtement, une série de mesures de pré étalonnage réalisées aux différentes fréquences Fn de la série de fréquences de pré étalonnage prédéfinie. La série de fréquences de pré étalonnage prédéfinie est ici la plage 60kHz et 960 kHz.
Chaque mesure de pré étalonnage de la série de mesures est réalisée :

- en positionnant les moyens d'induction de champ électromagnétique par rapport à la couche de l'éprouvette de pré étalonnage et en alimentant ces moyens d'induction Mind à l'aide du signal électrique alternatif de pré étalonnage $S_{et}$ afin d'induire dans l'éprouvette de pré étalonnage un champ magnétique B dépendant du signal électrique de pré étalonnage ; et
- en mesurant la caractéristique physique (c'est à dire l'impédance Zeta qui varie en fonction du champ magnétique induit dans l'éprouvette de pré étalonnage) ; puis
- en déduisant à partir du résultat de cette mesure la valeur prise par l'indicateur de conductivité (cette conductivité dépend de la conductivité du premier matériau de couche et de la fréquence Fn du signal de pré étalonnage au moment de la mesure).

Après avoir réalisé toutes les mesures aux différentes fréquences sur toutes les éprouvettes de pré étalonnage et enregistré toutes les valeurs prises par l'indicateur de conductivité, on analyse ces données pour identifier le couple de fréquences F1 et F2 qui permettra de réaliser la meilleure corrélation entre l'écart entre les valeurs de l'indicateur et les valeurs d'épaisseurs des éprouvettes de pré étalonnage correspondantes. L'analyse de détermination du couple F1, F2 consiste :

- à calculer, pour chaque éprouvette de pré étalonnage dont on connaît l'épaisseur de couche propre, tous les écarts possibles entre les valeurs de l'indicateur déterminées avec cette éprouvette de pré étalonnage ; puis
- à associer à chaque écart ainsi calculé le couple des fréquences ayant respectivement été utilisées pour déterminer ces dernière valeurs de l'indicateur. Puis on cherche à calculer une série de coefficients de corrélation pour évaluer l'intérêt de chacun des différents couples de fréquences possibles dans la mesure d'épaisseur.

Dans l'exemple précité, les couples de fréquences possibles, sont un premier couple 60kHz-120kHz, un second couple 60kHz-480kHz, un troisième couple 60-960kHz, un quatrième couple 120-480kHz, un cinquième couple 120kHz-960kHz, et un sixième couple 480kHz-960kHz.
En prenant les données obtenues avec chacun des couples, on peut calculer pour chaque couple un coefficient de corrélation R2 correspondant et illustrant la corrélation entre :

- la série des écarts de conductivité obtenus aux fréquences du couple ; et
- la série des épaisseurs des éprouvettes de pré étalonnage.

Pour exemple, en réalisant les mesures aux fréquences précitées sur une série d'éprouvettes titane avec une couche de carbure de tungstène, on calcule que le coefficient de corrélation le plus faible est celui obtenu avec le couple de fréquences 960-120kHz : R2=0.7162 et que le coefficient de corrélation le plus fort est celui obtenu avec le couple de fréquences 480-60kHz qui est R2=0.9595.

Pour mesurer les épaisseurs de pièces P présentant ces mêmes matériaux de substrat et de couche, on choisira donc parmi les couples de fréquences possibles, le couple de fréquences 60-480kHz qui présente la meilleure corrélation. En d'autres termes, on détermine lesdites première et seconde fréquences F1, F2 en sélectionnant parmi les différents couples de fréquences au moins un de ces couples qui permet un niveau de corrélation minimum prédéterminé entre :

- les écarts des valeurs de l'indicateur déterminées pour les éprouvettes de la série d'éprouvettes de pré étalonnage ; et
- les épaisseurs de couches de revêtement de ces éprouvettes de pré étalonnage,

les fréquences du couple sélectionné constituant lesdites première et seconde fréquences respectives.

On note que le niveau de corrélation minimum prédéterminé est choisi pour être d'au moins 0.90, car en dessous, on considère que la corrélation Ecarts / épaisseurs est insuffisante pour avoir une mesure d'épaisseur de couche de tolérance satisfaisante.

L'invention n'est pas limitée aux exemples décrits précédemment et peut comporter d'autres modes de réalisation non décrits.

En particulier, l'invention peut aussi concerner un procédé de fabrication d'une pièce dans lequel le revêtement est abrasé et/ou rectifié et dans lequel on pilote le déplacement de l'outil d'abrasion et /ou de rectification en fonction de mesures d'épaisseur de la couche de revêtement réalisées à l'aide du procédé de mesure selon l'invention. La mesure d'épaisseur est préférentiellement réalisée en même temps de l'opération d'abrasion et /ou de rectification. Ce pilotage d'outil utilisant la mesure d'épaisseur de la couche de revêtement permet de déplacer l'outil pour faire tendre l'épaisseur de la couche de revêtement vers une épaisseur prédéterminée. Dans ce mode de réalisation la buse B de la figure 4 est remplacée par un outil d'abrasion et/ou de rectification et on gère la distance entre l'outil et la pièce pour déterminer la profondeur d'usinage et par conséquent l'épaisseur de couche.

## Revendications

1. Procédé de mesure d'épaisseur d'une couche de revêtement (Rev) d'une pièce (P) formée sur un substrat (Sub) de cette pièce (P), le revêtement (Rev) et le substrat (Sub) étant respectivement composés de premier et second matériaux électriquement conducteurs distincts l'un de l'autre, le procédé comportant :

   - le positionnement de moyens d'induction (Mind) par rapport à la couche de revêtement (Rev) et l'alimentation de ces moyens d'induction (Mind) à l'aide d'au moins un signal électrique alternatif (S) afin d'induire dans la pièce (P) un champ magnétique (B) dépendant du signal électrique d'alimentation (S);
   - la mesure d'au moins une caractéristique physique (Zn) variant en fonction du champ magnétique (B) induit dans la pièce (P) ;
   - la détermination de première et seconde valeurs d'un indicateur ($\sigma$1, $\sigma$2), cet indicateur ($\sigma$n) dépendant au moins de la conductivité électrique du premier matériau ($\sigma$rev) et de fréquences (Fn) prises par le signal électrique d'alimentation (S), la première valeur d'indicateur ($\sigma$1) étant déterminée à partir d'une mesure de ladite au moins une caractéristique physique (Z1) réalisée lorsque le signal électrique (S) a une première fréquence donnée (F1) et la seconde valeur d'indicateur ($\sigma$2) étant déterminée à partir d'une mesure de ladite au moins une caractéristique physique (Z2) réalisée lorsque le signal électrique (S) a une seconde fréquence donnée (F2) distincte de la première fréquence (F1); puis
   - le calcul de l'écart entre les première et seconde valeurs ($\sigma$1, $\sigma$2) de l'indicateur et la détermination de l'épaisseur de la couche de revêtement (er) en fonction de cet écart et de données prédéterminées corrélant :
   - l'écart entre des valeurs de l'indicateur ($\sigma$1, $\sigma$2) ; avec
   - des valeurs d'épaisseurs de couche de revêtement (Rev) correspondantes.

2. Procédé selon la revendication 1, dans lequel ledit indicateur ($\sigma$n) dépendant au moins de la conductivité ($\sigma$Rev) du premier matériau (Rev) et de la fréquence (Fn) prise par le signal électrique d'alimentation (S), est une conductivité (σn) d'une portion de la pièce (P) qui est traversée par le champ magnétique (Bn).

3. Procédé selon la revendication 2, dans lequel pour obtenir les données prédéterminées :

- on utilise une série d'éprouvettes d'étalonnage (A, B, C, D, E, F, G, H, I) comportant chacune un substrat (Sub) formé dudit second matériau et une couche (Rev) formée dudit premier matériau, chacune des éprouvettes d'étalonnage ayant une épaisseur de couche de revêtement connue ; et
- on réalise pour chaque éprouvette d'étalonnage au moins une série de mesures consistant à positionner des moyens d'induction de champ électromagnétique (Mind) par rapport à la couche de l'éprouvette d'étalonnage et à évaluer des première et seconde valeurs d'étalonnage qui sont des valeurs prises par ledit indicateur, la première valeur d'étalonnage étant déterminée à partir d'au moins une mesure de ladite au moins une caractéristique physique (Zeta1) réalisée lorsque les moyens d'induction (Mind) sont alimentés avec un premier signal d'étalonnage (Seta) de fréquence égale à ladite première fréquence (F1) et la seconde valeur d'étalonnage étant déterminée à partir d'au moins une mesure de ladite au moins une caractéristique physique (Zeta2) réalisée lorsque les moyens d'induction (Mind) sont alimentés avec un second signal d'étalonnage (Seta) de fréquence égale à ladite seconde fréquence (F2) ; et
- pour chaque éprouvette d'étalonnage on enregistre des données corrélant l'épaisseur connue (δlim) de sa couche de revêtement (Rev), les première et seconde fréquences (F1, F2) et les première et seconde valeurs d'étalonnage.

4. Procédé selon la revendication 2, dans lequel lesdites première et seconde valeurs d'étalonnage sont respectivement des valeurs de conductivités calculées en fonction de mesures d'impédance (Zeta) réalisées avec lesdites éprouvettes d'étalonnage.

5. Procédé selon l'une quelconque des revendications précédentes dans lequel lesdites première et seconde fréquences (F1, F2) sont choisies pour que le champ électromagnétique (B) généré par les moyens d'induction (Mind) ait une profondeur de pénétration (δn) à l'intérieur du second matériau qui est inférieure aux trois quart de l'épaisseur du substrat (Sub), préférentiellement inférieure à la moitié de cette épaisseur de substrat et préférentiellement inférieure à un tiers de cette épaisseur de substrat.

6. Procédé selon la revendication 5, dans lequel la valeur de profondeur de pénétration du champ électromagnétique dans le second matériau, dite profondeur de pénétration standard δn dans un matériau, est donnée par la formule :

$$\delta n = 503 \ / \ (\sqrt{\sigma} * \mu r \ * \ Fn)$$

où :

- δn est la profondeur de pénétration en mètre ;
- σ est conductivité électrique (S/m) du matériau traversé par le champ d'induction ;
- μr est la perméabilité magnétique du matériau traversé ;
- Fn est la fréquence en Hertz du signal (S) utilisé pour alimenter les moyens d'induction (Mind) et générer le champ électromagnétique (Bn) dans le matériau.

7. Procédé selon l'une au moins des revendications précédentes dans lequel, pour déterminer les valeurs des première et seconde fréquences (F1, F2) :

A) on réalise sur chaque éprouvette d'un ensemble d'éprouvettes de pré étalonnage (A, B, C, D, E, F, G, H, I) ayant des épaisseurs de couches de revêtement différentes et connues, une série de mesures de pré étalonnage réalisées aux différents fréquences (Fn) d'une série de fréquences de pré étalonnage prédéfinie, chaque mesure de pré étalonnage de cette série de mesures consistant :

- à positionner des moyens d'induction de champ électromagnétique (Mind) par rapport à la couche (Rev) de l'éprouvette de pré étalonnage et à alimenter ces moyens d'induction à l'aide d'un signal électrique alternatif de pré étalonnage afin d'induire dans l'éprouvette de pré étalonnage un champ magnétique (B) dépendant du signal électrique de pré étalonnage ; et
- à mesurer une caractéristique physique (Zn) variant en fonction du champ magnétique (B) induit dans l'éprouvette de pré étalonnage et à déduire à partir de cette mesure de la caractéristique physique (Zn) une valeur prise par un indicateur (σn) dépendant au moins de la conductivité (σRev) du premier matériau de la couche de revêtement de l'éprouvette de pré étalonnage et de la fréquence (Fn) du signal de pré étalonnage au moment de la mesure ; puis

B) pour chaque éprouvette de pré étalonnage dont on connaît l'épaisseur de couche propre, on calcule tous les écarts possibles entre les valeurs de l'indicateur déterminées avec cette éprouvette de pré étalonnage et à chaque écart ainsi calculé on associe le couple des fréquences ayant respectivement été utilisées pour déterminer ces dernière valeurs de l'indicateur ;

C) on détermine lesdites première et seconde fréquences (F1, F2) en sélectionnant parmi les différents couples de fréquences au moins un de ces couples qui permet un niveau de corrélation minimum prédéterminé entre :

- les écarts des valeurs de l'indicateur (σn) déterminées pour les éprouvettes de la série d'éprouvettes de pré étalonnage ; et
- les épaisseurs de couches de revêtement (Rev) de ces éprouvettes de pré étalonnage,

les fréquences du couple sélectionné constituant lesdites première et seconde fréquences respectives (F1, F2).

8. Procédé selon la revendication 7, dans lequel la caractéristique physique (Zn) variant en fonction du champ magnétique (B) induit dans l'éprouvette de pré étalonnage est une impédance (Zn) et l'indicateur dépendant au moins de la conductivité du premier matériau de la couche de revêtement de l'éprouvette de pré étalonnage est une conductivité (σn) d'une partie de l'éprouvette de pré étalonnage.

**Patentansprüche**

1. Verfahren zum Messen der Dicke einer Deckschicht (Rev) eines Teils (P), die auf einem Substrat (Sub) dieses Teils (P) gebildet ist, wobei die Deckschicht (Rev) und das Substrat (Sub) aus einem ersten bzw. einem zweiten Material bestehen, die elektrisch leitend und zueinander verschieden sind, wobei das Verfahren umfasst:

- das Positionieren von Induktionsmitteln (Mind) relativ zur Deckschicht (Rev) und die Stromversorgung dieser Induktionsmittel (Mind) mittels mindestens eines elektrischen Wechselsignals (S), um in dem Teil (P) ein Magnetfeld (B) zu induzieren, das von dem elektrischen Versorgungssignal (S) abhängt;
- das Messen mindestens einer physikalischen Eigenschaft (Zn), die in Abhängigkeit des in dem Teil (P) induzierten Magnetfeldes (B) variiert;
- das Bestimmen eines ersten und eines zweiten Wertes eines Indikators (σ1, σ2), wobei dieser Indikator (σn) mindestens von der elektrischen Leitfähigkeit des ersten Materials (σrev) und von Frequenzen (Fn) abhängt, die von dem elektrischen Versorgungssignal (S) angenommen werden, wobei der erste Indikatorwert (σ1) anhand einer Messung der genannten mindestens einen physikalischen Eigenschaft (Z1) bestimmt wird, die durchgeführt wird, wenn das elektrische Signal (S) eine gegebene erste Frequenz (F1) hat, und der zweite Indikatorwert (σ2) anhand einer Messung der genannten mindestens einen physikalischen Eigenschaft (Z2) bestimmt wird, die durchgeführt wird, wenn das elektrische Signal (S) eine gegebene zweite Frequenz (F2) hat, die von der ersten Frequenz (F1) verschieden ist; und dann
- das Berechnen der Differenz zwischen dem ersten und dem zweiten Wert (σ1, σ2) des Indikators und das Bestimmen der Dicke der Deckschicht (er) in Abhängigkeit von dieser Differenz und von vorgegebenen Daten, die in Korrelation bringen:
- die Differenz zwischen den Werten des Indikators (σ1, σ2); mit
- entsprechenden Werten von Dicken der Deckschicht (Rev).

2. Verfahren nach Anspruch 1, bei dem der genannte Indikator (σn), der von mindestens der Leitfähigkeit (σRev) des ersten Materials (Rev) und der Frequenz (Fn) abhängt, die von dem elektrischen Versorgungssignal (S) angenommen wird, eine Leitfähigkeit (σn) eines Abschnittes des Teils (P) ist, durch den das Magnetfeld (Bn) hindurchgeht.

3. Verfahren nach Anspruch 2, bei dem zum Erhalt der vorgegebenen Daten:

- eine Reihe von Eichproben (A, B, C, D, E, F, G, H, I) verwendet wird, die jeweils ein Substrat (Sub) umfassen, das aus dem genannten zweiten Material gebildet ist, sowie eine Schicht (Rev), die aus dem genannten ersten Material gebildet ist, wobei jede der Eichproben eine bekannte Deckschichtdicke hat; und

- für jede Eichprobe mindestens eine Reihe von Messungen durchgeführt wird, die darin bestehen, Mittel (Mind) zum Induzieren eines elektromagnetischen Feldes relativ zur Schicht der Eichprobe zu positionieren und erste und zweite Eichwerte zu evaluieren, die Werte sind, die von dem Indikator angenommen werden, wobei der erste Eichwert anhand mindestens einer Messung der genannten mindestens einen physikalischen Eigenschaft (Zeta1) bestimmt wird, die durchgeführt wird, wenn die Induktionsmittel (Mind) mit einem ersten Eichsignal (Seta) mit einer Frequenz versorgt werden, die gleich der genannten ersten Frequenz (F1) ist, und der zweite Eichwert anhand mindestens einer Messung der genannten mindestens einen physikalischen Eigenschaft (Zeta2) bestimmt wird, die durchgeführt wird, wenn die Induktionsmittel (Mind) mit einem zweiten Eichsignal (Seta) mit einer Frequenz versorgt werden, die gleich der genannten zweiten Frequenz (F2) ist; und
- für jede Eichprobe Daten gespeichert werden, die die bekannte Dicke ($\delta$lim) ihrer Deckschicht (Rev), die erste und die zweite Frequenz (F1, F2) und den ersten und den zweiten Probenwert in Korrelation bringen.

4. Verfahren nach Anspruch 2, bei dem die genannten ersten und zweiten Probenwerte jeweilige Leitfähigkeitswerte sind, die in Abhängigkeit von Impedanzmessungen (Zeta) berechnet werden, die mit den genannten Eichproben durchgeführt werden.

5. Verfahren nach einem der vorhergehenden Ansprüche, bei dem die genannten ersten und zweiten Frequenzen (F1, F2) gewählt werden, damit das elektromagnetische Feld (B), das von den Induktionsmitteln (Mind) erzeugt wird, eine Eindringtiefe ($\delta$n) ins Innere des zweiten Materials hat, die geringer als drei Viertel der Dicke des Substrats (Sub) ist, vorzugsweise geringer als die Hälfte dieser Substratdicke und vorzugsweise geringer als ein Drittel dieser Substratdicke.

6. Verfahren nach Anspruch 5, bei dem der Eindringtiefenwert des elektromagnetischen Feldes in das zweite Material, bezeichnet als Standardeindringtiefe $\delta$n in ein Material, durch die Formel gegeben wird:

$$\delta n = 503 / \sqrt{\sigma^* \mu r * Fn)},$$

wobei:

- $\delta$n die Eindringtiefe in Metern ist;
- $\sigma$ die elektrische Leitfähigkeit (S/m) des von dem Induktionsfeld durchsetzten Materials ist;
- $\mu$r die magnetische Durchlässigkeit des durchsetzten Materials ist;
- Fn die Frequenz in Hertz des Signals (S) ist, das verwendet wird, um die Induktionsmittel (Mind) zu versorgen und das elektromagnetische Feld (Bn) in dem Material zu erzeugen.

7. Verfahren nach mindestens einem der vorhergehenden Ansprüche, bei dem zum Bestimmen der Werte der ersten und der zweiten Frequenz (F1, F2):

A) an jeder Probe eines Satzes von Vor-Eichproben (A, B, C, D, E, F, G, H, I), die unterschiedliche und bekannte Deckschichtdicken haben, eine Reihe von Vor-Eichmessungen durchgeführt werden, die mit unterschiedlichen Frequenzen (Fn) einer vordefinierten Reihe von Vor-Eichfrequenzen durchgeführt werden, wobei jede Vor-Eichmessung dieser Messreihe darin besteht:

- Positionieren von Mitteln zum Induzieren eines elektromagnetischen Feldes (Mind) relativ zur Schicht (Rev) der Vor-Eichprobe und Versorgen dieser Induktionsmittel mittels eines elektrischen Vor-Eichwechselsignals, um in der Vor-Eichprobe ein Magnetfeld (B) zu induzieren, das von dem elektrischen Vor-Eichsignal abhängt; und
- Messen einer physikalischen Eigenschaft (Zn), die in Abhängigkeit des Magnetfeldes (B), das in der Vor-Eichprobe induziert wird, variiert, und aus dieser Messung der physikalischen Eigenschaft (Zn) Herleiten eines Wertes, der von einem Indikator ($\sigma$n) angenommen wird, der von mindestens der Leitfähigkeit ($\sigma$Rev) des ersten Materials der Deckschicht der Vor-Eichprobe und der Frequenz (Fn) des Vor-Eichsignals zum Zeitpunkt der Messung abhängt; und dann

B) für jede Vor-Eichprobe, deren Dicke ihrer Schicht bekannt ist, alle möglichen Differenzen zwischen den Werten des Indikators berechnet werden, die mit dieser Vor-Eichprobe bestimmt werden, und jeder so berechneten Differenz das Paar von Frequenzen zugeordnet wird, die jeweils verwendet wurden, um diese letzten Werte des Indikators zu bestimmen;

C) die genannte erste und die genannte zweite Frequenz (F1, F2) bestimmt werden, indem aus den verschiedenen Frequenzpaaren mindestens eines dieser Paare auswählt wird, das ein vorgegebenes minimales Korrelationsniveau ermöglicht, zwischen:

- den Differenzen der Werte des Indikators ($\sigma$n), die für die Proben der Vor-Eichprobenreihe bestimmt werden; und
- den Dicken der Deckschichten (Rev) dieser Vor-Eichproben,

wobei die Frequenzen des ausgewählten Paares jeweils die genannte erste und die genannte zweite Frequenz (F1, F2) bilden.

8. Verfahren nach Anspruch 7, bei dem die physikalische Eigenschaft (Zn), die in Abhängigkeit des Magnetfeldes (B) variiert, das in der Vor-Eichprobe induziert wird, eine Impedanz (Zn) ist, und der Indikator, der zumindest von der Leitfähigkeit des ersten Materials der Deckschicht der Vor-Eichprobe abhängt, eine Leitfähigkeit ($\sigma$n) eines Abschnittes der Vor-Eichprobe ist.

## Claims

1. A method of measuring the thickness of a coating layer (Rev) of a workpiece (P) formed on a substrate (Sub) of the workpiece (P), the coating (Rev) and the substrate (Sub) being constituted respectively by first and second mutually distinct electrically conductive materials, the method comprising:

- positioning induction means ($M_{ind}$) relative to the coating layer (Rev) and feeding a probe alternating electrical signal (S) to the induction means ($M_{ind}$) in order to induce a magnetic field (B) in the workpiece (P) that depends on the probe electrical signal (S);
- measuring at least one physical characteristic ($Z_n$) that varies as a function of the magnetic field (B) induced in the workpiece (P);
- determining first and second values of an indicator ($\sigma_1$, $\sigma_2$), this indicator ($\sigma_n$) depending at least on the electrical conductivity ($\sigma_{Rev}$) of the first material and on the frequency ($F_n$) of the probe electrical signal (S), the first indicator value ($\sigma_1$) being determined from a measurement of said at least one physical characteristic ($Z_1$) taken when the electrical signal (S) has a first given frequency ($F_1$), and the second indicator value ($\sigma_2$) being determined from a measurement of said at least one physical characteristic ($Z_2$) taken when the electrical signal (S) has a second given frequency ($F_2$) distinct from the first frequency ($F_1$); and then
- calculating the difference between the first and second values ($\sigma_1$, $\sigma_2$) of the indicator and determining the thickness ($e_r$) of the coating layer as a function of this difference and of predetermined data correlating:

  - the difference between the indicator values ($\sigma_1$, $\sigma_2$) ; and
  - corresponding values for thicknesses of the coating layer (Rev).

2. A method according to claim 1, wherein said indicator ($\sigma_n$) depending at least on the conductivity ($\sigma_{Rev}$) of the first material (Rev) and on the frequency ($F_n$) of the probe electrical signal (S), is a conductivity ($\sigma_n$) of a portion of the workpiece (P) through which the magnetic field ($B_n$) passes.

3. A method according to claim 2, wherein in order to obtain the predetermined data the following steps are performed:

- using a series of calibration testpieces (A, B, C, D, E, F, G, H, I), each comprising a substrate (Sub) made of said second material and a layer (Rev) made of said first material, each of the calibration testpieces having a known coating layer thickness;
- for each calibration testpiece, performing at least one series of measurements consisting in positioning magnetic field induction means ($M_{ind}$) relative to the layer of the calibration testpiece and evaluating first and second calibration values that are the values taken by said indicator, the first calibration value being determined from at least one measurement of said at least one physical characteristic ($Z_{eta1}$) taken while the induction means ($M_{ind}$) are being fed with a first calibration signal ($S_{eta}$) of frequency equal to said first frequency ($F_1$) and the second calibration value being determined from at least one measurement of said at least one physical characteristic ($Z_{eta2}$) taken when the induction means ($M_{ind}$) are fed with a second calibration signal ($S_{eta}$) of frequency equal to said second frequency ($F_2$); and

• for each calibration testpiece, recording data correlating the known thickness ($\delta_{lim}$) of its coating layer (Rev) with the first and second frequencies ($F_1$, $F_2$) and the first and second calibration values.

4. A method according to claim 2, wherein said first and second calibration values are respective conductivity values calculated as a function of measurements of impedance ($Z_{eta}$) taken on said calibration testpieces.

5. A method according to any preceding claim, wherein said first and second frequencies ($F_1$, $F_2$) are selected so that the electromagnetic field (B) generated by the induction means ($M_{ind}$) has a penetration depth ($\delta_n$) into the second material that is less than three-fourths of the thickness of the substrate (Sub), preferably less than half this thickness of the substrate, and more preferably less than one-third this thickness of the substrate.

6. A method according to claim 5, wherein the value of the penetration depth of the electromagnetic field in the second material, referred to as the "standard" penetration depth $\delta_n$ in a material, is given by the following formula:

$$\delta_n = 503/(\sqrt{\sigma}\times\mu_r\times F_n)$$

where:

- $\delta_n$ is the penetration depth in meters;
- $\sigma$ is the electrical conductivity (S/m) of the material through which the induction field passes;
- $\mu_r$ is the magnetic permeability of the material through which the induction field passes; and
- $F_n$ is the frequency in hertz of the probe signal (S) fed to the induction means ($M_{ind}$) for generating the electromagnetic field ($B_n$) in the material.

7. A method according to any preceding claim, wherein, in order to determine the values of the first and second frequencies ($F_1$, $F_2$), the following steps are performed:

A) on each testpiece of a set of pre-calibration testpieces (A, B, C, D, E, F, G, H, I) having coating layer thicknesses that are different and known, taking a series of pre-calibration measurements performed at the various frequencies ($F_n$) of a predefined series of pre-calibration frequencies, each pre-calibration measurement in this series of measurements consisting:

- in positioning electromagnetic field induction means ($M_{ind}$) relative to the coating layer (Rev) of the pre-calibration testpiece and in feeding a pre-calibration probe alternating electrical signal to said induction means in order to induce a magnetic field (B) in the pre-calibration testpiece, which field depends on the pre-calibration electrical signal; and
- measuring a physical characteristic ($Z_n$) that varies as a function of the magnetic field (B) induced in the pre-calibration testpiece and in using this measurement of the physical characteristic ($Z_n$) to deduce a value taken by an indicator ($\sigma_n$) that depends at least on the conductivity ($\sigma_{Rev}$) of the first material of the coating layer of the pre-calibration testpiece and on the frequency ($F_n$) of the pre-calibration signal at the moment the measurement is taken; then

B) for each pre-calibration testpiece for which the thickness of its layer is known, calculating all of the possible differences between the values of the indicator as determined with the pre-calibration testpiece and associating each difference as calculated in this way with the pair of frequencies that were used respectively for determining these values of the indicator; and

C) determining said first and second frequencies ($F_1$, $F_2$) by selecting from the various pairs of frequencies, at least one pair of frequencies that enables a predetermined minimum level of correlation to be obtained between:

- the value differences of the indicator ($\sigma_n$) as determined for the testpieces in the series of pre-calibration testpieces; and
- the thicknesses of the coating layers (Rev) of the pre-calibration testpieces;

with the frequencies of the selected pair constituting said first and second respective frequencies ($F_1$, $F_2$).

8. A method according to claim 7, wherein the physical characteristic ($Z_n$) that varies as a function of the magnetic field (B) induced in the pre-calibration testpiece is an impedance ($Z_n$), and the indicator depending at least on the conductivity of the first material of the coating layer of the pre-calibration testpiece is the conductivity ($\sigma_n$) of a portion of the pre-calibration testpiece.

## Fig. 1

S :(U$_n$, I$_n$ , F$_n$)

Disp

Rev

P

Mind

L1

L2

G

Z$_n$=f($\vec{B_n}$)

Mmes

$\vec{B_1}$

$\sigma_1$

$\sigma_2$

$\sigma_{Rev}$

$\delta_{lim}$

$\delta_1 =f(F_1,\sigma_1)$

$\delta_2 =f(F_2,\sigma_2)$

$\delta_n$

$\vec{B_2}$

$\vec{B_n}=f(F_n, \sigma_n)$

Sub

$\sigma_{Sub}$

Fext

## Fig. 2

$\delta_b$

$\delta_{lim}$

$\delta_a$

0

F$_{min}$

F$_{lim}$

F$_{max}$

F$_n$

## Fig. 3

## Fig. 4

Fig. 5 Corrélation ép. HVOF (60- 480 kHz) - 2 Fournisseurs confondus

$$y = 1.114x^2 + 0.1035x - 0.0021$$
$$R^2 = 0.9928$$

EP 2 769 174 B1

## RÉFÉRENCES CITÉES DANS LA DESCRIPTION

**Documents brevets cités dans la description**

- US 5889401 A
- US 6366083 B1